# EUROPÄISCHE PATENTANMELDUNG

(11) **EP 1 729 121 A1**
(43) Veröffentlichungstag der Anmeldung: **06.12.2006**
(21) Anmeldenummer: 05104586.2
(22) Anmeldetag: 30.05.2005
(51) Int. Cl.: G01N 27/414

(54) **Elektrochemischer Sensor**

(71) Anmelder: Mettler-Toledo AG, 8606 Greifensee (CH)
(72) Erfinder: Bernasconi, Markus, 5033, Buchs (CH); Demuth, Caspar, 8610, Uster (CH); Van Halen, Henk, 9406 LG, Assen (NL); Van der Tuin, Jan, 9711 RC, Groningen (NL)

(57) **Zusammenfassung**

Elektrochemischer Sensor mit einem ISFET (103, 203), umfassend eine FET-Grundstruktur mit einer gegen ein Messmedium hin gerichteten, im Wesentlichen planaren Oberflächenbereich, einem Source-Bereich (25), einem Drain-Bereich (26) und einem dazwischen liegenden leitenden Kanal (13), eine direkt auf der FET-Grundstruktur ausgebildeten, diese vollständig bedeckende erste Schicht (21), welche eine dielektrische Teilschicht und/oder eine Feldoxidteilschicht umfasst und zumindest innerhalb des direkt mit dem Messmedium in Kontakt stehenden Bereichs des ISFET (103, 203) im Wesentlichen kanten- und stufenfrei ausgestaltet ist, eine die erste Schicht (21) vollständig bedeckende ionensensitive Schicht (117), welche ebenfalls zumindest innerhalb des direkt mit dem Messmedium in Kontakt stehenden Bereichs des ISFET (103, 203) im Wesentlichen kanten- und stufenfrei ausgestaltet ist, und eine den ISFET (103, 203) zum Messmedium hin abschliessende ESD-Schutzschicht (118, 218) mit einer Aussparung (22, 222) oberhalb des leitenden Kanals (13), welche einen direkt mit dem Messmedium in Kontakt stehenden ionensensitiven Bereich (119, 219) definiert.

## Beschreibung

Die Erfindung betrifft einen elektrochemischen Sensor mit einem ionensensitiven Feldeffekttransistor (ISFET).

Im Gegensatz zu herkömmlichen Glaselektroden zeichnen sich elektrochemische Sensoren mit einem ISFET als Sensorelement dadurch aus, dass sie mechanisch sehr stabil und im Vergleich zu den Glaselektroden nahezu unzerbrechlich sind. Diese Eigenschaften begünstigen den Einsatz von Sensoren mit einem ionensensitiven Feldeffekttransistor in Bereichen wie beispielsweise der Lebensmittelindustrie und der pharmazeutischen Industrie. Vor allem, da in einigen industriellen Bereichen aufgrund von gesetzlichen Vorschriften der Einsatz von Glaselektroden, insbesondere für pH-Messungen, wegen der Gefahr von Glasbruch in nicht mehr zulässig ist bzw. in Frage gestellt wird.

Elektrochemische Sensoren mit einem ionensensitiven Feldeffekttransistor können je nach Ausgestaltung zur pH-Bestimmung oder auch zur Bestimmung verschiedener anderer Stoffe eingesetzt werden

Der prinzipielle Aufbau eines ISFET umfasst einen Feldeffekttransistor (FET) auf den schichtweise unterschiedliche Materialien aufgebracht werden, wobei die Materialien und der Aufbau stark vom vorgesehenen Einsatzgebiet abhängen. Die FET-Grundstruktur umfasst ein Substrat, häufig einen Siliziumeinkristall, mit darin ausgebildetem Source-Bereich, Drain-Bereich und leitendem Kanal. Die auf den FET aufgebrachten Schichten werden durch chemisches Ätzen oder bereits beim Auftragen unter Verwendung von Masken strukturiert. Die Schichten werden so strukturiert, dass zumindest ein ionensensitiver Oberflächenbereich ausgebildet wird, der so genannte Gate-Bereich, welcher in direktem Kontakt mit dem Messmedium steht.

Ein Verfahren und eine Schaltung zur Messung der lonenaktivität in Flüssigkeiten unter Verwendung eines ISFET wird in der DE 3 116 884 A1 offenbart. Der ISFET weist eine Isolierschicht auf, welche die Funktion einer ionensensitiven Schicht hat und einen ionensensitiven Oberflächenbereich bedeckt. Dieser ionensensitive Oberflächenbereich befindet sich auf der dem Medium zugewandten Seite des ISFET und oberhalb eines zwischen zwischen einem Source-Bereich und einem Drain-Bereich ausgebildeten leitenden Kanal.

Für die Funktionsfähigkeit des Sensors ist es von entscheidender Bedeutung, dass mit Ausnahme des ionensensitiven Oberflächenbereichs im Wesentlichen alle Teile des Sensors von einem Gehäuse mediumsdicht umschlossen sind. Der ISFET selbst sollte ausserdem auch gegen übermässige mechanische Belastung, beispielsweise beim Einsatz unter erhöhtem Druck, gesichert sein.

Ein Sensor mit einem Sensorgehäuse, welches die empfindlichen Teile des Sensors mediumsdicht abschliesst und gleichzeitig eine spannungsfreie Anordnung des ISFET ermöglicht, wird zum Beispiel in der EP 1 396 718 A1 offenbart.

Die Herstellung von ionensensitiven Feldeffekttransistoren ist ein komplexer Prozess und umfasst die schichtweise Auftragung verschiedener Materialien, insbesondere oxidischer und metallischer Materialien. Die einzelnen Schichten werden zumindest teilweise vor Auftragung der nächsten Materialschicht noch bearbeitet und/oder strukturiert. Dieses kann beispielsweise durch chemisches Ätzen geschehen. Ein derartiges Verfahren macht den Einsatz von speziellen und damit teueren Masken zur funktionsbedingten Strukturierung der verschiedenen Schichten des ISFET notwendig.

Weiterentwicklungen im Bereich von Sensoren mit ionensensitiven Feldeffekttransistoren finden daher vor allem durch Variationen der für den ISFET verwendeten Schichtmaterialien statt. Die ionensensitive Schicht eines pHsensitiven Feldeffekttransistors kann beispielsweise unterschiedliche Metalloxide, Metallnitride und Mischungen daraus umfassen.

Eine weitere Variante von Sensoren mit Feldeffekttransistoren stellen die so genannten Biosensoren dar. Diese Sensoren weisen im Gate-Bereich eine Schicht, meist einen Biofilm oder eine biologische Membran, auf, welche sensitiv gegenüber bestimmten biologischen und/oder biochemischen Stoffen in einer Flüssigkeit ist. Ein Verfahren zur Herstellung eines Biosensors, welcher im Gate-Bereich zusätzlich eine biologische oder biochemische Membran aufweist, ist in der DE 41 15 398 A1 offenbart. Als sensitive Membran werden hier vor allem extrem dünne und empfindliche Langmuir-Blodgett-Filme verwendet, welche um das Einreissen der Filme zu vermeiden, auf einer im Gate-Bereich planaren Siliziumnitridschicht aufgebracht werden. Der Gate-Bereich liegt wiederum oberhalb eines leitenden Kanals, welcher zwischen dem Source- und Drain-Bereich ausgebildet ist. Source- und Drain-Bereich werden hier durch ein lonenimplantations-Verfahren im Substrat ausgebildet.

Ein ISFET für einen pH-Sensor mit einer sich über ihre Schichtdicke kontinuierlich verändernden ionenselektiven Schicht aus einem Metalloxidnitridgemisch ist beispielsweise in der WO 2004/079355 A1 beschrieben. Der ISFET weist mehrere auf einer FET-Grundstruktur aufgebrachte Schichten auf, wobei in der FET-Grundstruktur ein Source-Bereich, ein Drain-Bereich und ein leitender Kanal, welcher den Gate-Bereich definiert ausgebildet sind. Die FET-Grundstruktur wird von einer Feldoxidschicht unter Auslassung eines ionensensitiven Bereichs bedeckt. Die Feldoxidschicht weist einen kantenartigen Abschluss zum ionensensitiven Bereich hin auf. Auf dieser Feldoxidschicht und auch auf dem Gate-Bereich ist eine weitere Materialschicht aufgebracht, welche sowohl isolierende als auch ionensensitive Eigenschaften aufweist. Wie allgemein üblich bedeckt diese ionensensitive Schicht auch die den Gate-Bereich abschliessenden Kanten der Feldoxidschicht. Gerade diese mit der ionensensitiven Schicht bedeckten Kanten des Gate-Bereichs werden, wie es die Praxis zeigt, vor allem von aggressiven Medien angegriffen und zumindest teilweise zerstört, was mit der Zeit eine Zerstörung des ISFET und damit auch des Sensors nach sich zieht.

Wie sich in der Praxis zeigte, weisen die herkömmlichen Sensoren mit ionensensitiven Feldeffekttransistoren nur eine geringe Beständigkeit gegenüber den in vielen industriellen Bereichen verwendeten Reinigungsmethoden auf, wie zum Beispiel CIP-Verfahren (clean in place) oder SIP-Verfahren (sterilize in place). Insbesondere CIP-Verfahren sind sehr aggressive Reinigungsmethoden, da sie z. B. die Verwendung von heisser, hoch konzentrierter alkalischer Lösung umfassen.

Herkömmliche Sensoren mit ionensensitiven Feldeffekttransistoren werden im Gegensatz zu den zerbrechlicheren Glaselektroden durch die heisse alkalische Lösung angegriffen und innerhalb nur weniger Reinigungszyklen zerstört.

Bisher mussten Sensoren mit ionensensitiven Feldeffekttransistoren daher während eines Reinigungsvorgangs aus der Produktionsanlage zum Beispiel in eine Kammer zurückgezogen werden, um vor der Reinigungslösung geschützt zu werden. Die dazu notwendigen Vorrichtungen sind im Vergleich zur direkten Reinigung in der Anlage aufwändig und komplex. Eine solche Vorrichtung nimmt nicht nur mehr Platz ein als der Sensor allein, sie muss auch angesteuert und sowohl die Kammer als auch der Sensor müssen separat mit einer anderen Methode gereinigt werden.

Es wäre daher vorteilhaft, einen elektrochemischen Sensor und vor allem einen ionensensitiven Feldeffekttransistor derart zu gestalten, dass der Sensor unter Prozessbedingungen gereinigt werden kann.

Daraus ergibt sich als Aufgabe die Entwicklung eines elektrochemischen Sensors mit einem ISFET mit erhöhter Beständigkeit gegenüber aggressiven Medien, insbesondere gegenüber Laugen.

Gelöst wird diese Aufgabe durch einen elektrochemischen Sensor nach Anspruch 1 und ein Verfahren zu Herstellung desselben nach Anspruch 10.

Ein elektrochemischer Sensor umfasst einen ISFET mit einer FET-Grundstruktur mit einem gegen ein Messmedium hin gerichteten, im Wesentlichen planaren Oberflächenbereich. In der FET-Grundstruktur sind ein Source-Bereich, ein Drain-Bereich und ein dazwischen liegender leitender Kanal ausgebildet. Direkt auf der FET-Grundstruktur wird eine die FET-Grundstruktur vollständig bedeckende erste Schicht ausgebildet, welche eine dielektrische Teilschicht und/oder eine Feldoxidteilschicht umfasst. Die erste Schicht ist zumindest innerhalb des direkt mit dem Messmedium in Kontakt stehenden Oberflächenbereichs des ISFET im Wesentlichen kanten- und stufenfrei ausgestaltet. Die erste Schicht wird im Wesentlichen von einer ionensensitiven Schicht bedeckt, welche ebenfalls zumindest innerhalb des direkt mit dem Messmedium in Kontakt stehenden Bereichs des ISFET im Wesentlichen kanten- und stufenfrei ausgestaltet ist. Eine ESD-Schutzschicht (ESD; electrostatic discharge) grenzt den ISFET zum Messmedium hin ab, wobei die ESD-Schutzschicht eine Aussparung oberhalb des leitenden Kanals aufweist, welche einen direkt mit dem Messmedium in Kontakt stehenden ionensensitiven Bereich frei lässt. Die ESD-Schutzschicht ist eine metallische Schicht, welche dazu dient, elektrostatische Einwirkungen auf den ISFET abzuleiten.

Die kanten- und stufenfreie Ausgestaltung der ersten Schicht und der ionensensitiven Schicht, zumindest im direkt mit dem Messmedium in Kontakt stehenden Oberflächenbereich, stellt eine wesentliche Verbesserung gegenüber den bekannten ISFET dar. Die ionensensitive Schicht ist im ionensensitiven Bereich planar und bedeckt nur noch den Boden einer Vertiefung, den so genannten Gate-Bereich. Diese Ausgestaltung bietet daher im Vergleich zu herkömmlichen ISFET weniger Angriffsmöglichkeiten für aggressive Medien.

Die erste Schicht, welche eine dielektrische Teilschicht und/oder eine Feldoxidteilschicht umfasst, ist vorzugsweise als eine einzige Materialschicht ausgestaltet. Eine dielektrische Teilschicht dient dazu, ein Weiterdiffundieren der FET-Dotierung im Substrat während nachfolgender Beschichtungs-Vorgänge mit hohen Temperaturen zu verhindern und eine Feldoxidteilschicht dient als eine IsolatorSchicht.

Wie bei herkömmlichen ISFET wird auf einem p-Siliziumsubstrat zuerst eine strukturierte, dotierende Schicht ausgebildet. Diese dotierende Schicht entsteht durch die Auftragung von mindestens zwei unterschiedlich dotierten Siliziumdioxid-Schichten, welche jeweils durch gezieltes chemisches Ätzen strukturiert werden. Zum Dotieren werden häufig Phosphor- und/oder Boratome verwendet. Die Dotieratome diffundieren beim Erhitzen in das Substrat des FET ein und bilden dort unter anderem den Source- und Drain-Bereich aus. Durch einen Oxidationsprozess wird dann zwischen der dotierenden Schicht und dem Substrat eine als Isolator wirkende Feldoxidschicht ausgebildet.

Bei einem erfindungsgemässen ISFET wird die dotierende Schicht zur Schaffung eines planaren Oberflächenbereichs auf der FET-Grundstruktur beispielsweise durch chemisches Ätzen zumindest teilsweise wieder entfernt, vor allem um im mit dem Messmedium in Kontakt stehenden Bereich des ISFET eine im Wesentlichen planare, also kanten- und stufenfreie Ausgestaltung sowohl der ersten Schicht als auch der ionensensitiven Schicht zu ermöglichen. Aus diesem Grund ist es besonders wichtig, dass die erste Schicht, welche direkt auf dem planaren Oberflächenbereich der FET-Grundstruktur ausgebildet und/oder aufgebracht wird, sowohl als isolierende Feldoxidteilschicht als auch als dielektrische Teilschicht wirkt.

Der Rauheit der Oberfläche bzw. der Grenzfläche der ersten Schicht und der darauf aufgebrachten ionensensitiven Schicht liegt hauptsächlich der dem verwendeten Beschichtungs-Verfahren anhängige Fehler zu Grunde. Die Schichten werden meist nicht weiter strukturiert oder bearbeitet. Die Rauheit der Flächen liegt je nach Beschichtungs-Verfahren unterhalb von 10 nm und vorzugsweise sogar unterhalb von 3 nm.

Zwischen der ionensensitiven Schicht und der ESD-Schutzschicht kann der ISFET zusätzlich eine isolierende Pufferschicht aufweisen, welche den Abstand zwischen der ESD-Schutzschicht und der FET-Grundstruktur vergrössert. Ein vergrösserter Abstand zwischen der ESD-Schutzschicht und der FET-Grundstruktur hat einen positiven Einfluss auf die Qualität der Messsignale. Die Pufferschicht bedeckt die ionensensitive Schicht unter Auslassung des ionensensitiven Bereichs und bildet eine Kante um den ionensensitiven Bereich herum aus. Der ionensensitive Gate-Bereich liegt somit in einer durch die Pufferschicht und/oder der ESD-Schutzschicht gebildeten Vertiefung. Die ionensensitive Schicht bedeckt nur den Boden dieser Vertiefung.

Mit Ausnahme des ionensensitiven Bereichs wird die dem Messmedium zugewandte Seite bzw. Oberfläche des ISFET abschliessend mit einer so genannten ESD-Schutzschicht (electrostatic discharge) beschichtet. Diese Schicht ist eine metallische Schicht, welche den ionensensitiven Bereich des ISFET frei lässt und begrenzt. Sie dient dazu, elektrostatische Einwirkungen auf den ISFET abzuleiten. Die in der ESD-Schutzschicht auftretenden Potentiale werden über eine Diode abgeleitet, welche im Allgemeinen an einer Seite des ISFET angeordnet ist. Die Höhe dieser Diode bedingt, dass der ISFET zu den Seiten hin eine bestimmte Mindestschichtdicke aufweisen sollte, was erreicht wird, in dem nur ein Teil der dotierenden Schicht wieder abgetragen wird, so dass diese einen erhöhten Rand um den planaren Oberflächenbereich des ISFET herum ausbildet.

Die ionensensitive Schicht umfasst vorzugsweise Aluminiumoxid.

Ein elektrochemischer Sensor mit einem ISFET kann durch das Eindringen eines aggressiven Mediums unter Umständen zerstört werden. Daher weist der Sensor ein Sensorgehäuse auf, welches den ISFET weitestgehend mediumsdicht umschliesst. Eine Messung ist jedoch nur möglich, wenn der ionensensitive Bereich in direktem Kontakt mit dem Messmedium steht. Aus diesem Grund umfasst das Sensorgehäuse einen fest damit verbundenen Gehäuseaufsatz, welcher den ISFET umschliesst und so ausgestaltet ist, dass er einen Oberflächenbereich des ISFET freilässt. Dieser Oberflächenbereich umfasst unter anderem den ionensensitiven Bereich und kann direkt mit dem Messmedium wechselwirken.

Da der ISFET in der Mitte und an den Seiten unterschiedliche Höhen bzw. Dicken aufweist, ist es unvermeidbar, dass die einzelnen eine im Wesentlichen gleichmässsige Schichtdicke aufweisenden Schichten eine Art Stufe mit einer beliebigen Steigung als Übergang zwischen den Bereichen unterschiedlicher Höhe aufweisen. Um einen Angriff vor allem von aggressiven Medien im Bereich dieser Stufen zu vermeiden, werden die Schichten und das Sensorgehäuse derart gestaltet, dass die Stufen ausserhalb des mit dem Messmedium in Kontakt stehenden Bereichs des ISFET und damit unter oder innerhalb des Sensorgehäuses liegen. Sie sind zum Medium hin abgedichtet und stehen mit diesem nicht in Kontakt.

Das Verfahren zur Herstellung eines erfindungsgemässen ISFET für einen elektrochemischen Sensor umfasst verschieden Beschichtungs- und Strukturierungs-Vorgänge. Auf einer Oberfläche eines Substrats, im Allgemeinen ein undotierter Siliziumeinkristall oder ein n-dotierter Siliziumeinkristall, wird eine dotierende Schicht ausgebildet und strukturiert. Diese Oberfläche stellt beim fertigen ISFET die dem Messmedium zugewandte Oberfläche dar.

Die dotierende Schicht wird aus mindestens zwei ebenfalls strukturierten Schichten, von denen eine n-dotierend und eine p-dotierend ist, ausgebildet. Als Material für die dotierende Schicht dient häufig mit Phosphor oder Bor dotiertes Siliziumdioxid.

Auf das Substrat wird zunächst eine p-dotierende Schicht aufgebracht, welche anschliessend beispielsweise durch photolithographische Verfahren und/oder chemisches Ätzen strukturiert wird, so dass auf der Substrat-Oberfläche inselartige p-dotierte Bereiche stehen bleiben. Anschliessend wird unter Verwendung derselben Techniken und Verfahrensschritte eine n-dotierende Schicht ausgebildet, so dass die dotierende Schicht nun n- und p-dotierte Bereiche aufweist.

Zur Dotierung wird das Substrat zusammen mit der auf einer seiner Oberflächen ausgebildeten dotierenden Schicht einem Temperierschritt unterworfen, wodurch die Dotieratome der dotierenden Schicht zumindest teilweise in das Substrat hinein diffundieren. Die dotierende Schicht ist derart strukturiert, dass während des Erhitzens durch Diffusion der Dotieratome in das Substrat zumindest ein definierter Source-Bereich und ein definierter Drain-Bereich ausgebildet werden. In einem nachfolgenden Oxidationsschritt wird eine Feldoxidschicht auf dem Substrat ausgebildet.

Zur Herstellung eines erfindungsgemässen ISFET wird die verbleibende dotierende Schicht sowie die Feldoxidschicht wieder abgetragen, so dass auf dem Substrat ein planarer Oberflächenbereich ausgebildet wird. Die Schichten können beispielsweise durch chemisches Ätzen entfernt werden.

Auf diesem planaren Oberflächenbereich der FET-Grundstruktur wird wieder mindestens eine erste Schicht erzeugt, welche eine dielektrische Teilschicht und/oder eine Feldoxidteilschicht umfasst, und auf die erste Schicht wird eine ionensensitive Schicht aufgebracht. Die Teilschichten der ersten Schicht werden durch Oxidation und/oder mittels eines Beschichtungsverfahrens ausgebildet.

In einem Ausführungsbeispiel wird die ionensensitive Schicht zur Abschirmung gegen elektrostatische Einflüsse unter Auslassung eines ionensensitiven Bereichs mit einer ESD-Schutzschicht bedeckt.

In einem bevorzugten Ausführungsbeispiel wird auf die ionensensitive Schicht, wiederum unter Auslassung eines ionensensitiven Bereichs, zunächst eine Pufferschicht aufgebracht, welche in einem zweiten Schritt vollständig von einer ESD-Schutzschicht bedeckt wird.

Zur Auftragung der unterschiedlichen Schichten können verschiedene Beschichtungs-Verfahren, wie CVD (chemical vapor deposition), PECVD (plasma enhanced chemical vapor deposition), thermisches Aufdampfen, Sputtern, reaktives Sputtern, reaktives Aufdampfen, Laser Ablation und Epitaxie verwendet werden.

Ein derartig ausgestalteter elektrochemischer Sensor mit einem ISFET zeichnet sich dadurch aus, dass der ISFET und damit auch der Sensor eine erhöhte chemische Beständigkeit insbesondere gegenüber konzentrierten Laugen aufweist. Verschiedene Ausführungsbeispiele eines verbesserten elektrochemischen Sensors mit einem ISEFT werden in den folgenden Figuren dargestellt. Die Figuren sind zum besseren Verständnis teilweise stark vergrössert dargestellt und nicht massstabsgetreu gezeichnet. Es zeigen:
- Fig. 1: einen bekannten elektrochemischen Sensor im Längsschnitt;
- Fig. 2: einen Längsschnitt durch einen herkömmlichen ISFET in einem Sensorgehäuse;
- Fig. 3a: einen Längsschnitt durch eine FET-Grundstruktur mit einer Feldoxidschicht;
- Fig. 3b: einen Längsschnitt durch eine FET-Grundstruktur mit einem planaren Oberflächenbereich;
- Fig. 3c: einen Längsschnitt durch einen ISFET mit einem planaren ionensensitiven Oberflächenbereich;
- Fig. 4: einen Längsschnitt durch einen ISFET mit einem planaren ionensensitiven Oberflächenbereich und einer zusätzlichen Pufferschicht.

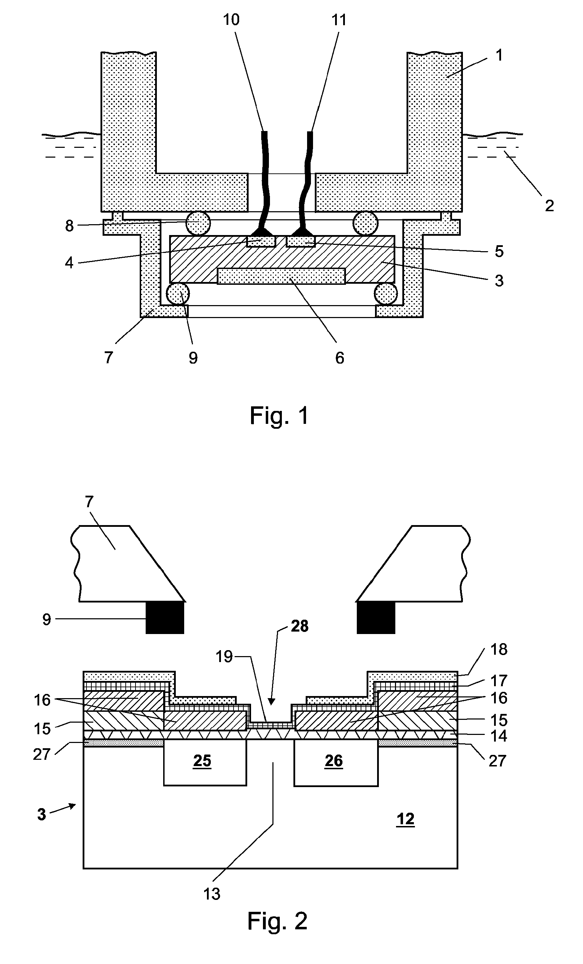

Zum besseren Verständnis der Anordnung eines ionensensitiven Feldeffekttransistors (ISFET) in einem Sensor ist in Figur 1 der in ein Messmedium eintauchende Teil eines bekannten Sensors im Schnitt gezeigt. Der Sensor beinhaltet ein im Wesentlichen zylinderförmiges Sensorgehäuse 1 aus einem Kunststoff, beispielsweise Polyetheretherketon (PEEK), das in ein Messmedium 2 eintaucht. Der Sensor ist mit einem scheibenförmigen ionensensitiven Feldeffekttransistor 3 ausgestattet, der in diesem Ausführungsbeispiel rückseitig, auf der dem Messmedium 2 abgewandten Seite, einen Source-Anschluss 4 und einen Drain-Anschluss 5 und frontseitig, auf der dem Messmedium 2 zugewandten Seite einen mit dem Messmedium 2 in Kontakt stehenden, den ionensensitiven Bereich 6 umfassenden Oberflächenbereich aufweist.

Der ISFET 3 ist in einem Gehäuseaufsatz 7 derart zwischen zwei Dichtungen 8, 9 gelagert, dass der ionensensitive Bereich 6 mit dem Messmedium 2 in Kontakt steht und der ISFET 3 gleichzeitig spannungsfrei im Gehäuseaufsatz 7 angeordnet ist. Der Gehäuseaufsatz 7 besteht aus demselben Material wie das Sensorgehäuse 1 und wird mit diesem durch Ultraschallschweissen oder eine andere Art von Vibrations-Schweissen fest verbunden. Die Dichtungen 8, 9 sind vorzugsweise als umlaufende O-Ringe ausgestaltet. Die Dichtung 9 dichtet den ISFET 3 unter Aussparungen eines den ionensensitiven Bereich 6 umfassenden Teils der Oberfläche des ISFET 3 gegenüber dem Messmedium 2 ab. Die zweite Dichtung 8 liegt zwischen dem ISFET 3 und dem Sensorgehäuse 1, sie dichtet nochmals den Source-Anschluss 4 und Drain-Anschluss 5 gegen möglicherweise eindringendes Messmedium 2 ab und dient auch dazu, den ISFET 3 spannungsfrei im Sensor zu lagern.

Der Source-Anschluss 4 bzw. der Drain-Anschluss 5 sind in einem mittigen, dem Sensorgehäuse 1 zugewandten Bereich des ISFET 3 angeordnet und jeweils an einen Ableitungsdraht 10, 11 angeschlossen. Die Ableitungsdrähte 10, 11 werden durch eine Öffnung im Sensorgehäuse 1 zu einer hier nicht dargestellten Messvorrichtung geführt.

Der genaue Aufbau eines bekannten ionensensitiven Feldeffekttransistors 3 in einem Sensorgehäuse ist in Figur 2 im Längsschnitt gezeigt. Zur Verdeutlichung ist der ISFET 3 in Relation zum dem Messmedium zugewandten Teil des Gehäuseaufsatzes 7 stark vergrössert dargestellt.

Der ISFET 3 ist schichtartig auf der Grundstruktur eines bekannten Feldeffekttransistors aufgebaut, wobei seine Herstellung hier nur grob beschrieben wird. In einem Substrat 12 sind ein n-dotierter Source-Bereich 25, ein n-dotierter Drain-Bereich 26 und ein p-dotierter Bereich 27 derart ausgebildet, dass zwischen dem Source-Bereich 25 und dem Drain-Bereich 26 ein leitender Kanal 13 verläuft. Bekannte FET-Substrate und Grundstrukturen umfassen im Allgemeinen einen dotierten Siliziumeinkristall, wobei sowohl npn- als auch pnp-Dotierungen bekannt sind. Für die exakte Schaltung eines ISFET sei an dieser Stelle auf bekannte Literatur, wie P. Bergveld, Thirty Years of ISFETOLOGY, Sensors and Actuators B, 88, 1-20 (2003) und darin zitierte Publikationen, verwiesen.

Direkt auf das Substrat 12 wird zunächst eine strukturierte, dotierende Schicht, welche mindestens eine p-dotierende Schicht 15 und eine n-dotierende Schicht 16 umfasst, ausgebildet. Die dotierenden Schichten 15, 16 umfassen beispielsweise mit Phosphor oder Bor dotiertes Siliziumdioxid. Die p-dotierende Schicht 15 wird so ausgebildet, dass sie die dem Messmedium zugewandte Oberfläche des Substrats 12 zunächst vollständig bedeckt. In einem weiteren Arbeitsschritt wird die p-dotierende Schicht 15 durch photolithographische Verfahren und/oder nasschemische Ätz-Verfahren strukturiert und teilweise wieder abgetragen. Auf die strukturierte, n-dotierende Schicht 15 wird dann die p-dotierende Schicht 16 aufgetragen und ebenfalls strukturiert, so dass sich auf der Oberfläche des Substrats 12 n-dotierte und p-dotierte Bereiche, sowie eine Vertiefung ausbilden, welche sich bezogen auf die Zeichnung oberhalb des leitenden Kanals 13 befindet und bereits die Lage des Gate-Bereichs 19 in einer Vertiefung 28 des ISFET 3 vorgibt. Die Schichtdicken der dotierenden Schichten 15, 16 liegen im Allgemeinen jeweils zwischen 150 und 500 nm.

In einem weiteren Schritt wird das Substrat 12 unter Ausbildung des Source-Bereichs 25, des Drain-Bereichs 26 und des p-dotierten Bereichs 27 dotiert. Die Dotierung erfolgt durch thermisches Erhitzen des Substrats 12 und der darauf ausgebildeten, strukturierten dotierenden Schichten 15, 16.

Durch einen Oxidationsschritt wird auf der gesamten Oberfläche des Substrats 12 zwischen den dotierenden Schichten 15, 16 und dem Source-Bereich 25, Drain-Bereich 26, dem p-dotierten Bereich 27 und oberhalb des leitenden Kanals 13 eine Feldoxidschicht 14 ausgebildet, welche aus p- und n-dotiertem Siliziumdioxid besteht und eine Schichtdicke zwischen etwa 40 und etwa 150 nm aufweist. Der Oxidationsschritt kann auch zusammen mit dem Dotieren in einem einzigen Arbeitsschritt durchgeführt werden. Auf die so erzeugte FET-Grundstruktur werden anschliessend die verschiedenen Schichten des ISFET 3 aufgebaut.

Die Gesamtdicke der oberhalb des leitenden Kanals 13 aufgebrachten Schichten beeinflusst das elektrische Feld, welches während des Betriebs des ISFET ausgebildet wird.

Auf die FET-Grundstruktur, also auf die Feldoxidschicht 14, die dotierende Schicht 16 und die Vertiefung 28 wird eine gleichmässig dicke, ionensensitive Schicht 17, welche vorzugsweise aus Aluminiumoxid besteht und eine Dicke zwischen 50 und 100 nm aufweist, aufgebracht. Die ionensensitive Schicht 17 bedeckt die Feldoxidschicht 14, die dotierende Schicht 16, die Vertiefung 28 und deren Kanten. Im Bereich der Vertiefung 28 bildet die ionensensitive Schicht 17 im fertigen ISFET den Abschluss zum Messmedium und wird während einer Messung direkt mit diesem in Kontakt gebracht.

Durch die Auftragung der ionensensitiven Schicht 17 wurde zunächst ein ionensensitiver Bereich geschaffen, der die gesamte Oberfläche des ISFET bedeckt. Für eine Messung wird jedoch nur der von der ionensensitiven Schicht 17 bedeckte Boden der Vertiefung 28, der so genannten Gate-Bereich 19, genutzt.

Zur Abschirmung des ISFET 3 gegen störende elektrostatische Entladungen werden die nicht-aktiven Oberflächenbereiche mit einer metallischen ESD-Schutzschicht 18 (ESD; electrostatic discharge) bedeckt, welche vorzugsweise Platin enthält. Die ESD-Schutzschicht wird so ausgestaltet, dass sie fast bis an den Rand der Vertiefung 28 heranreicht und diese begrenzt.

Zum weiteren Schutz des ISFET kann dieser noch zusätzlich, mit Aussnahme des Gate-Bereichs 19, mit einer Oxidschicht und einer Kunststoffschicht versehen werden.

Zur Abdichtung und Kapselung des ISFET 3 wird dieser in ein Sensorgehäuse (s. Figur 1) eingebracht. Das Sensorgehäuse weist einen hier nur angedeuteten Gehäuseaufsatz 7 auf, in dem der ISFET 3 spannungsfrei angeordnet ist. Der Gehäuseaufsatz 7 bildet einerseits einen mediumsdichten Abschluss und ermöglicht andererseits, dass die ionensensitive Schicht 17 im Gate-Bereich 19 mit dem Messmedium in Kontakt gebracht werden kann. Dazu ist zwischen dem Gehäuseaufsatz 7 und dem ISFET 3 eine Dichtung 9 angebracht, zum Beispiel ein O-Ring, welcher einen den Gate-Bereich 19 umfassenden Oberflächenbereich so umschliesst, dass dieser mit dem Messmedium in Kontakt gebracht werden kann, und dass der restliche ISFET mediumsdicht abgedichtet wird. Der von der Dichtung 9 umschlossene Oberflächenbereich umfasst auch einen Teil der ESD-Schutzschicht 18 und ist daher grösser als die Fläche des Gate-Bereichs 19.

Wie die Praxis zeigt, werden die bekannten Sensoren mit einem ionensensitiven Feldeffekttransistor von aggressiven chemischen Mitteln und insbesondere von höher konzentrierten Laugen, wie sie u. a. bei den CIP-Reinigungs-Verfahren von Produktionsanlagen eingesetzt werden, angegriffen. Die bei der CIP-Reinigung eingesetzten Mittel zerstören einen ISFET-Sensor bereits nach nur wenigen Zyklen.

Überraschenderweise lässt sich die Beständigkeit der ISFET-Sensoren gegenüber derartigen Bedingungen durch eine Veränderung des ionensensitiven Feldeffekttransistors und insbesondere durch eine Veränderung der Topographie, der Schichtfolge und der Strukturierung der Schichten in Kombination beeinflussen.

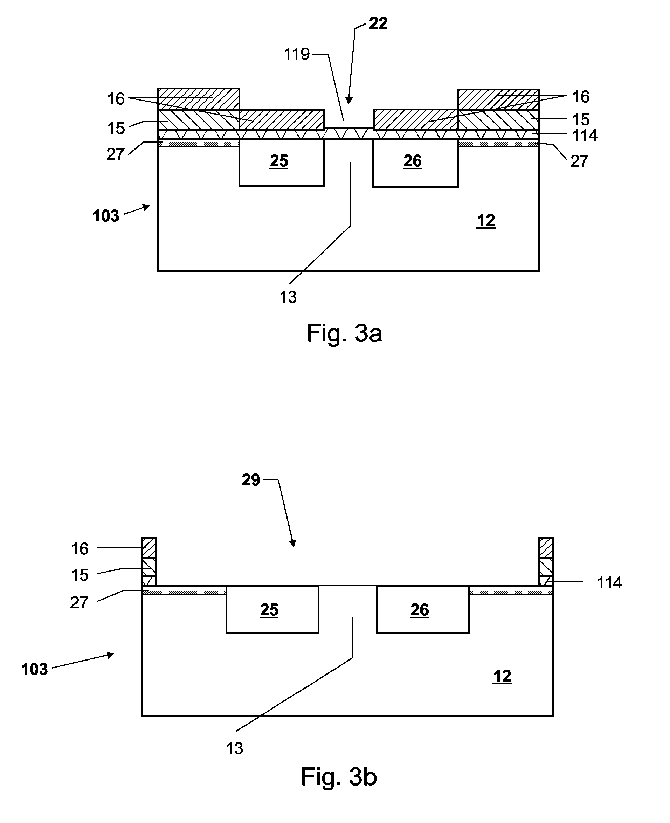

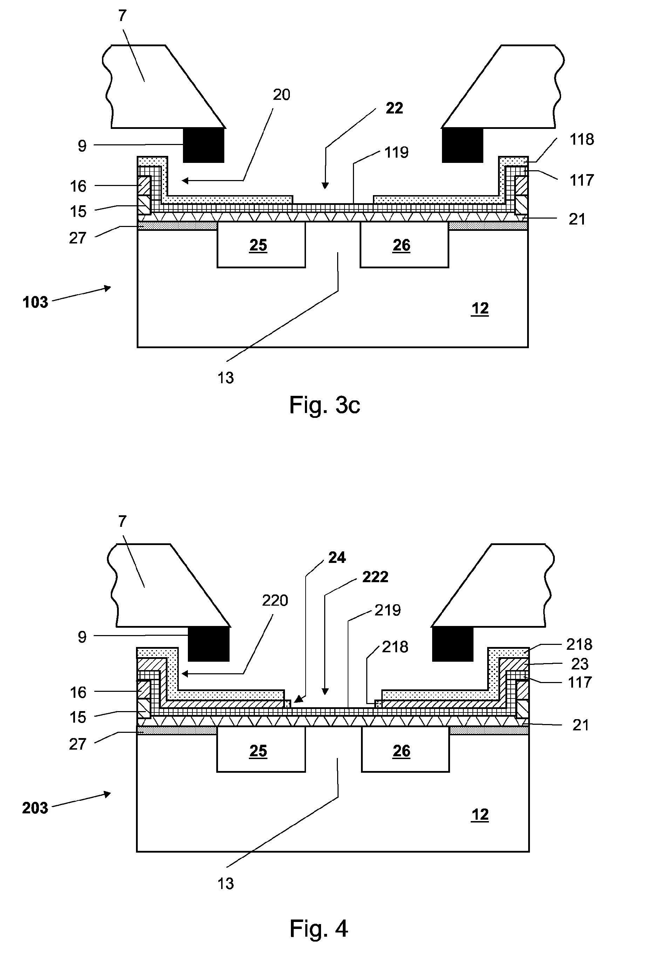

Ein verbesserter Sensor und einige Zwischenschritte bei dessen Herstellung sind in den Figuren 3a bis 3c gezeigt. Der in Figur 3c dargestellte Sensor zeigt aufgrund seines Aufbaus verbesserte Eigenschaften in Bezug auf die Chemikalien-Beständigkeit, insbesondere gegenüber Laugen.

Die in Figur 3a gezeigte FET-Grundstruktur des ISFET 103, welche das Substrat 12, den Source-Bereich 25, den Drain-Bereich 26, den p-dotierten Bereich 27, den leitenden Kanal 13, sowie die oxidativ erzeugte Feldoxidschicht 114 umfasst, entspricht der FET-Grundstruktur des ISFET 3 aus Figur 2.

In einem weiteren Schritt werden die zunächst zur Ausbildung des Source-Bereichs 25, des Drain-Bereichs 26 und des p-dotierten Bereichs 27 aufgebrachten strukturierten, dotierenden Schichten 15, 16 zumindest im mit dem Medium in Kontakt stehenden Bereich wieder vollständig abgetragen, wie es in Figur 3b dargestellt ist. Die Abtragung der dotierenden Schichten 15, 16 erfolgt beispielsweise durch chemisches Ätzen. Durch die weitgehende Entfernung der dotierenden Schichten 15, 16 entsteht ein planarer bzw. stufen- und kantenfreier Oberflächenbereich 29 von äusserst geringer Rauheit, welche von Resten der dotierenden Schichten 15, 16 und der unter dem Rest der p-dotierenden Schicht 15 verbleibende Feldoxidschicht 114 begrenzt wird.

Nach dem weitgehenden Entfernen der dotierenden Schichten 15, 16, wird auf die so geschaffene Fläche mit einem nun planaren Oberflächenbereich auf der FET-Grundstruktur wieder durch Oxidation eine erste Schicht 21 erzeugt und/oder mittels eines Beschichtungsverfahrens aufgebracht (s. Figur 3c), welche direkt an die verbliebene Feldoxidschicht (114, Figur 3b) angrenzt und dasselbe Material umfasst, die erste Schicht 21 wird in den Figuren 3c und 4 daher als durchgehende Schicht dargestellt.

Die so erzeugte erste Schicht 21 umfasst vorzugsweise Siliziumdioxid und übernimmt die Aufgaben einer dielektrischen und/oder einer Feldoxidschicht, sie kann eine einzige Materialschicht oder zwei nacheinander ausgebildete Teilschichten umfassen. Die erste Schicht dient sowohl als Isolator als auch dazu, ein Weiterdiffundieren der FET-Dotierung zu verhindern. Die erste Schicht 21 weist über den kompletten mit dem Messmedium in Kontakt tretenden Bereich des ISFET 103 eine gleichmässige Schichtdicke zwischen etwa 50 und etwa 100 nm auf. Zu den Seiten hin wird die erste Schicht 21 durch die Reste der übereinander liegenden dotierenden Schichten 15, 16 begrenzt. Die Reste der dotierenden Schichten 15, 16 bilden auf der Oberfläche der ersten Schicht 21 eine Stufe 20. Diese Stufe 20 ist notwendig, damit der fertige ISFET eine seitliche Mindestschichtdicke erreicht, die das daran Anbringen einer Diode zum Ableiten der Potentiale einer ESD-Schutzschicht 118 ermöglicht.

Die gesamte Oberfläche der ersten Schicht 21, sowie die Oberfläche der verbliebenen n-dotierenden Schicht 16 wird wiederum mit einer ionensensitiven Schicht 117, vorzugsweise aus Aluminiumoxid, mit einer gleichmässigen Schichtdicke von etwa 50 bis 100 nm bedeckt. Die Stufe 20 wird ebenfalls von der ionensensitiven Schicht 117 bedeckt.

Sowohl die erste Schicht 21, als auch die ionensensitive Schicht 117 weisen zumindest im mit dem Messmedium in Kontakt stehenden Bereich eine weitestgehend planare Oberfläche auf. Die Rauheit der Oberfläche bzw. der Grenzfläche der Schichten wird im Wesentlichen durch die Ungenauigkeiten der Beschichtungs-Verfahren verursacht und liegt in einem Bereich unterhalb von 10 nm, vorzugsweise sogar unterhalb von 3 nm.

Zur Abschirmung wird mit Ausnahme eines Gate-Bereichs 119 die ionensensitive Schicht 117 mit einer ESD-Schutzschicht 118 bedeckt. Die ESD-Schutzschicht 118 ist vorzugsweise eine Titan-Platin-Titan-Schicht, welche eine Titan-Schicht und eine Schicht aus einer Platin-Titan-Legierung umfasst. Titan wirkt dabei als eine Art Haftvermittler zwischen der ionensensitiven Schicht und der Titan-Platin-Legierung. Die Auslassung des Gate-Bereichs 119 erzeugt eine Aussparung 22, die allerdings sehr viel flacher ist, als die Vertiefung in Figur 2. Die Tiefe der Aussparung 22 wird ausschliesslich durch die Schichtdicke bzw. Höhe der ESD-Schutzschicht bestimmt, welche etwa 30 bis 300 nm beträgt.

Beim Einbau des ISFET 103 in einen Sensor, wie bereits anhand der Figuren 1 und 2 beschrieben, wird der hier nur angedeutete Gehäuseaufsatz 7 mit der Dichtung 9 in Bezug auf den ISFET 103 so angeordnet, dass die Dichtung 9 die Stufe 20 vollständig abdeckt, dass heisst, die Stufe 20 liegt hinter oder unter der Dichtung 9 (siehe auch Figur 2 und 4). Der von der Dichtung 9 umschlossene, den Gate-Bereich 119 umfassende Oberflächenbereich weist somit nur eine Kante auf, welche aufgrund der Aussparung 22 des Gate-Bereichs 119 in der ESD-Schutzschicht 118 entsteht. Die Stufe 20 liegt hinter oder unter der Dichtung 9, so dass der mit dem Messmedium in Kontakt stehenden Bereich im Wesentlichen kanten- und stufenfrei ausgestaltet ist.

Ein weiteres bevorzugtes Ausführungsbeispiel des Sensors ist in Figur 4 gezeigt. Der ISFET 203 besteht wie bereits in den Figuren 3a-c beschrieben aus einer FET-Grundstruktur mit einem Substrat 12 und darin ausgebildetem Source-Bereich 25, Drain-Bereich 26, p-dotiertem Bereich 27 und einem dazwischen liegenden leitenden Kanal 13, einer auf die FET-Grundstruktur erzeugten ersten Schicht 21 und einer ionensensitiven Schicht 117. Auch in diesem Ausführungsbeispiel verbleiben zu den Seiten des ISFET hin Reste der dotierenden Schichten 15, 16, so dass eine seitlich Mindestschichtdicke des ISFET gewährleistet ist. Aufgrund der Reste der dotierenden Schichten 15, 16 weist der fertige ISFET eine Stufe 220 auf.

Bevor die ESD-Schutzschicht 218 aufgebracht wird, wird die ionensensitive Schicht 117 noch mit einer Pufferschicht 23 unter Erzeugung einer Aussparung 222, welche den Gate-Bereich 219 definiert, bedeckt. Die Pufferschicht 23 ist zwischen 500 und 900 nm dick und besteht vorzugsweise aus Siliziumdioxid. Die Pufferschicht 23 dient dazu, negative Einflüsse auf das Messergebnis zu minimieren, welche durch einen zu geringen Abstand zwischen der ESD-Schutzschicht 218 und der FET-Grundstruktur entstehen können.

Als Abschluss zum Messmedium hin, wird der ISFET 203 unter Auslassung des Gate-Bereichs 219 wiederum mit einer metallischen ESD-Schutzschicht 218 bedeckt. Die ESD-Schutzschicht besteht vorzugsweise aus einer bereits in Figur 3c beschriebenen Titan-Platin-Titan-Schicht und weist eine Schichtdicke von etwa 40 bis 60 nm auf. Die ESD-Schutzschicht 218 wird vorzugsweise derart aufgebracht, dass diese sich auch vor dem Abschluss der Pufferschicht 23 zum Gate-Bereich 219 hin befindet. Die metallische ESD-Schutzschicht 218 bildet jetzt den Abschluss des Gate-Bereichs 219 und stellt einen zusätzlichen Schutz der Pufferschicht 23 gegenüber aggressiven Medien dar.

Die Stufe 220 zeigt sich auch in den auf der FET-Grundstruktur aufgebrachten Schichten 117, 23, 218. Wie auch in Figur 3c wird der ISFET 203 beim Einbau in einen Sensor gemäss Figur 1 so von der Dichtung 9 mediumsdicht abgeschlossen, dass die die Stufe 220 von der Dichtung 9 unter Auslassung eines den Gate-Bereich 219 umfassenden Oberflächenbereichs überdeckt werden bzw. hinter der Dichtung 9 liegen. Der mit dem Messmedium in Kontakt stehende Bereich umfasst somit nur die, den Abschluss des Gates 219 bildenden Kanten 24, wobei insbesondere die Oberfläche des Gate-Bereichs 219 planar, also stufen- und kantenfrei ausgestaltet ist.

Die in den Ausführungsbeispielen beschriebenen ionensensitiven Feldeffekttransistoren umfassen im Allgemeinen eine bekannte FET-Grundstruktur, wobei es sich prinzipiell um jegliche bekannte FET-Grundstruktur handeln kann. FET-Grundstrukturen auf Silizium-Basis werden bevorzugt verwendet.

In den Ausführungsbeispielen besteht die ionensensitive Schicht 17, 117 vorzugsweise aus Aluminiumoxid. Es können selbstverständlich auch andere ionensensitive Materialien, beispielsweise Metalloxide wie Tantalpentoxid, Zinnoxid, Zirkonoxid, Siliziumdioxid und Hafniumoxid; Carbonitride; Metallnitride; Siliziumnitride; Metallsilikate; amorpher Kohlenstoff und diamantartiger Kohlenstoff (diamant like carbon) und auch Mischungen aus diesen Materialien verwendet werden. Wobei das verwendete Material nicht auf die hier angeführten Materialien beschränkt ist.

Die erste Schicht, welche in den verbesserten ionensensitiven Feldeffekttransistoren als Feldoxidteilschicht und als dielektrische Teilschicht wirkt, wird in den Ausführungsbeispielen als eine einzelne Schicht dargestellt. Es ist auch möglich, dass die erste Schicht zwei Materialschichten umfasst, welche entweder gleiche oder unterschiedlichen Materialien aufweisen. In diesem Fall können die beiden Materialschichten entweder nacheinander mittels eines geeigneten Beschichtungsverfahren aufgetragen werden oder die erste Materialschicht kann durch Oxidation ausgebildet und die zweite Materialschicht mittels eines geeigneten Beschichtungsverfahrens auf die erste Materialschicht aufgebracht werden. Für eine dielektrische Teilschicht und/oder eine Feldoxidteilschicht können verschiedene Metalloxide, Metallnitride, Halbleiteroxide und Halbleiternitride eingesetzt werden. Zu diesen Materialien gehören beispielsweise Siliziumdioxid, Magnesiumoxid, Titanoxid und Siliziumnitrid. Als Material für die erste Schicht wird Siliziumdioxid bevorzugt, da dieses Material sowohl als dielektrische Teilschicht als auch als Feldoxidteilschicht eingesetzt werden kann.

Die Pufferschicht umfasst vorzugsweise Siliziumdioxid, allerdings können auch andere Isolatoren wie beispielsweise Magnesiumoxid, Titanoxid, Aluminiumnitrid, Siliziumnitrid und auch Polymere eingesetzt werden.

Die ESD-Schutzschicht kann ein beliebiges leitendes Material umfassen, wobei Metalle bevorzugt werden. Insbesondere werden Metalle verwendet welche sowohl chemisch als auch mechanisch stabil sind, wie beispielsweise Silber, Platin, Titan, Gold und Mischungen daraus. Bevorzugt wird eine Titan-Platin-Legierung, welche für eine bessere Haftung auf der darunter liegenden Schicht auf eine Titan-Schicht aufgebracht wird.

Die einzelnen Schichten können mit verschiedenen, bekannten Beschichtungs-Verfahren wie CVD (chemical vapor deposition), PECVD (plasma enhanced chemical vapor deposition), thermisches Aufdampfen, Sputtern, reaktives Sputtern, reaktives Aufdampfen, Laser Ablation und Epitaxie aufgebracht werden. Bevorzugt wird für Oxidschichten die Auftragung mittels CVD und für metallische Schichten das Sputtern.

Die Strukturierung der einzelnen Schichten, also beispielsweise die Erzeugung von Vertiefungen und Aussparungen in den einzelnen Schichten, geschieht unter Verwendung spezieller Masken entweder bereits während des Beschichtungsvorgangs und/oder durch chemische Ätz-Verfahren.

Die in Figur 1 gezeigte, bekannte Ausführungsform eines Sensors mit einem ISFET weist eine Rückseitenkontaktierung auf. Die Kontakte befinden sich also auf der dem Medium abgewandten Seite des ISFET. Es ist selbstverständlich auch möglich, dass die vorgestellten ionensensitiven Feldeffekttransistoren eine Vorderseitenkontaktierung aufweisen bzw. die Kontakte an einer anderen bekannten Stelle auf dem ISFET angeordnet sind.

Die in Figur 1 gezeigte, bekannte Ausführungsform eines Sensors mit einem ISFET dient nur als Beispiel. Selbstverständlich können die hier vorgestellten ionensensitiven Feldeffekttransistoren auch in andere Sensorgehäuse und Sensoren eingebaut werden, bzw. auf andere Arten gegenüber dem Messmedium abgekapselt werden.

### Bezugszeichenliste

- 1: Sensorgehäuse
- 2: Messmedium
- 3, 103, 203: ISFET
- 4: Source-Anschluss
- 5: Drain-Anschluss
- 6: ionensensitiver Oberflächenbereich
- 7: Gehäuseaufsatz
- 8: Dichtung
- 9: Dichtung
- 10: Ableitungsdraht
- 11: Ableitungsdraht
- 12: Substrat
- 13: Kanal
- 14, 114: Feldoxidschicht
- 15: dotierende Schicht (p-Siliziumdioxid)
- 16: dotierende Schicht (n-Siliziumdioxid)
- 17, 117: ionensensitive Schicht
- 18, 118, 218: ESD-Schutzschicht
- 19, 119, 219: Gate-Bereich
- 20,220: Stufe
- 21: erste Schicht
- 22, 222: Aussparung
- 23: Pufferschicht
- 24: Kante
- 25: Source-Bereich
- 26: Drain-Bereich
- 27: dotierter Bereich (p⁺-Siliziumdioxid)
- 28: Vertiefung
- 29: Planarer Oberflächenbereich

## Patentansprüche

1. Elektrochemischer Sensor mit einem ISFET (103, 203), umfassend
- eine FET-Grundstruktur mit einem gegen ein Messmedium hin gerichteten, im Wesentlichen planaren Oberflächenbereich, einem Source-Bereich (25), einem Drain-Bereich (26) und einem dazwischen liegenden leitenden Kanal (13),
- eine direkt auf der FET-Grundstruktur ausgebildeten, diese vollständig bedeckende erste Schicht (21), welche eine dielektrische Teilschicht und/oder eine Feldoxidteilschicht umfasst und zumindest innerhalb des direkt mit dem Messmedium in Kontakt stehenden Bereichs des ISFET (103, 203) im Wesentlichen kanten- und stufenfrei ausgestaltet ist,
- eine die erste Schicht (21) innerhalb des planaren Oberflächenbereichs bedeckende ionensensitive Schicht (117), welche ebenfalls zumindest innerhalb des direkt mit dem Messmedium in Kontakt stehenden Bereichs des ISFET (103, 203) im Wesentlichen kanten- und stufenfrei ausgestaltet ist, und
- eine den ISFET (103, 203) zum Messmedium hin abschliessende ESD-Schutzschicht (118, 218) mit einer Aussparung (22, 222) oberhalb des leitenden Kanals (13), welche einen direkt mit dem Messmedium in Kontakt stehenden ionensensitiven Bereich (119, 219) definiert.

2. Elektrochemischer Sensor nach Anspruch 1 **dadurch gekennzeichnet, dass** die erste Schicht (21) als eine einzige Materialschicht ausgestaltet ist.

3. Elektrochemischer Sensor nach einem der Ansprüche 1 bis 2 **dadurch gekennzeichnet, dass** die Rauheit der ionensensitive Schicht (117) und der ersten Schicht (21) weniger als 10 nm und vorzugsweise weniger als 3 nm beträgt.

4. Elektrochemischer Sensor nach einem der Ansprüche 1 bis 3 **dadurch gekennzeichnet, dass** der ISFET (203) eine zwischen der ionensensitiven Schicht (117) und der ESD-Schutzschicht (218) angeordnete Pufferschicht (23) aufweist, welche die ionensensitive Schicht (117) unter Auslassung des ionensensitiven Bereichs (219) bedeckt.

5. Elektrochemischer Sensor nach einem der Ansprüche 1 bis 4 **dadurch gekennzeichnet, dass** die ESD-Schutzschicht (118, 218) eine metallische Schicht ist.

6. Elektrochemischer Sensor nach einem der Ansprüche 1 bis 5 **dadurch gekennzeichnet, dass** die ionensensitive Schicht (117) vorzugsweise Aluminiumoxid umfasst.

7. Elektrochemischer Sensor nach einem der Ansprüche 1 bis 6 **dadurch gekennzeichnet, dass** der elektrochemische Sensor ein Sensorgehäuse (1) mit einem Gehäuseaufsatz (7) aufweist, wobei der Gehäuseaufsatz (7) den ISFET (103, 203) im Wesentlichen unter Aussparung des mit dem Messmedium in Kontakt stehenden Bereichs mediumsdicht umschliesst.

8. Elektrochemischer Sensor nach einem der Ansprüche 1 bis 7 **dadurch gekennzeichnet, dass** eine in den die FET-Grundstruktur bedeckenden Schichten ausgebildete Stufe (20, 220) ausserhalb des mit dem Messmedium in Kontakt stehenden Bereichs des ISFET (103, 203) liegt.

9. Elektrochemischer Sensor nach einem der Ansprüche 1 bis 8 **dadurch gekennzeichnet, dass** der Sensor und insbesondere der ISFET (103, 203) eine erhöhte chemische Beständigkeit insbesondere gegenüber konzentrierten Laugen aufweist.

10. Verfahren zur Herstellung eines ISFET (103, 203) für einen elektrochemischen Sensor nach Anspruch 1 mindestens die Schritte umfassend
- Ausbildung und Strukturierung einer dotierenden Schicht auf einer Oberfläche eines Substrats (12),
- Dotieren des Substrats (12) durch Temperieren des Substrats (12) und der darauf ausgebildeten dotierenden Schicht,
- oxidative Erzeugung einer Feldoxidschicht (114) auf dem Substrat (12),
- Erzeugung eines planaren Oberflächenbereichs (29) auf dem Substrat (12) durch Abtragung der dotierenden Schicht,
- Erzeugung mindestens einer ersten Schicht (21), welche eine dielektrische Teilschicht und/oder eine Feldoxidteilschicht umfasst, auf dem planaren Oberflächenbereich (29) des Substrats (12),
- Aufbringen einer ionensensitiven Schicht (117).

11. Verfahren nach Anspruch 10 **dadurch gekennzeichnet, dass** die dotierende Schicht aus mindestens einer strukturierten, n-dotierenden Schicht (16) und mindestens einer strukturierten, p-dotierenden Schicht (15) ausgebildet wird.

12. Verfahren nach einem der Ansprüche 10 oder 11 **dadurch gekennzeichnet, dass** unter Auslassung eines ionensensitiven Bereichs eine ESD-Schutzschicht (118, 218) auf die ionensensitive Schicht (117) aufgebracht wird.

13. Verfahren nach einem der Ansprüche 10 oder 11 **dadurch gekennzeichnet, dass** unter Auslassung eines ionensensitiven Bereichs eine Pufferschicht (23) und eine ESD-Schutzschicht (118, 218) auf die ionensensitive Schicht (117) aufgebracht werden.
